(19) Europäisches Patentamt
European Patent Office
Office européen des brevets

(11) **EP 1 365 256 A1**

(12) **EUROPEAN PATENT APPLICATION**
published in accordance with Art. 158(3) EPC

(43) Date of publication:
26.11.2003 Bulletin 2003/48

(51) Int Cl.⁷: **G01S 13/32**, G01B 15/00, G01S 17/32, G01C 3/06, G01B 11/00

(21) Application number: 02701614.6

(22) Date of filing: 27.02.2002

(86) International application number:
PCT/JP02/01825

(87) International publication number:
WO 02/079799 (10.10.2002 Gazette 2002/41)

(84) Designated Contracting States:
AT BE CH CY DE DK ES FI FR GB GR IE IT LI LU MC NL PT SE TR
Designated Extension States:
AL LT LV MK RO SI

(30) Priority: 01.03.2001 JP 2001109270
24.03.2001 JP 2001130355
06.08.2001 JP 2001237280

(71) Applicants:
• Iritani, Tadamitsu
Tokushima-shi, Tokushima 770-0874 (JP)

• Sekisui Jushi Corporation
Osaka-shi, Osaka 530-0047 (JP)

(72) Inventor: IRITANI, Tadamitsu
Tokushima-shi, Tokushima 770-0874 (JP)

(74) Representative: Wagner & Geyer
Gewürzmühlstrasse 5
D-80538 München (DE)

(54) **DISTANCE MEASURING DEVICE, DISTANCE MEASURING EQUIPMENT AND DISTANCE MEASURING METHOD**

(57)    A distance-measuring device for measuring the distance to an object (M) which comprises (i) a frequency-controlling means (11A) which outputs a frequency-control signal whose frequency is changing, (ii) a transmitting means (12A) which sends out an electromagnetic wave whose frequency is the same as the frequency of the frequency-control signal, (iii) a detecting means (13A) which is provided between the transmitting means (12A) and the object (M), detects the amplitude of a standing wave formed between the transmitting means (12A) and the object (M), and outputs an amplitude signal corresponding to the detected amplitude, and (iv) a signal-processing unit (14A) which forms a frequency-amplitude function representing the relation between the frequency of the frequency-control signal and the value of the amplitude signal and calculates the distance between the detecting means (13A) and the object (M) by using the period of the frequency-amplitude function.

FIG.1

## Description

## TECHNICAL FIELD

This invention relates to a distance-measuring device. A progressive wave such as an electric wave or a light wave emitted from an antenna or a light source toward an object is reflected by the object to become a reflected wave. The progressive wave and the reflected wave interfere with each other to become a standing wave between the antenna or the light source and the object. This invention relates to a device, equipment, and a method for measuring distances to various objects by using such standing waves.

## BACKGROUND ART

Electric-wave radars, such as microwave radars and millimeter-wave radars, are well known as electric wave-based distance-measuring devices. Electric-wave radars are classified into pulse radar, FMCW radar, and so on. Spread-spectrum radars and CDMA radars have recently come into use.

The pulse radar finds the distance to an object by sending out a pulse signal toward the object and measuring the time from the sending out to the return of the pulse signal. The spread-spectrum radar and the CDMA radar find the distance to an object in basically the same way as the pulse radar.

The FMCW radar finds the distance to an object by sending out a frequency-modulated continuous wave and determining the difference in frequency between the signal sent out and its reflection from the object. The FMCW radar is capable of measuring the moving speed of the object simultaneously.

It is difficult, however, to measure short distances with the above radars, their minimum measurable distance being several ten meters.

Also available is the Doppler radar, which has a simple construction and is capable of measuring short distances; however, it is incapable of measuring the distance to a standstill object.

Besides, if two or more radars are installed near to each other and used, their measuring accuracy is reduced or they may fail to function because there is available no means for each radar to avoid receiving signals sent out by the other radars.

On the other hand, on-vehicle radars are coming into use to prevent vehicles from running into obstacles or pedestrians. They are expected to be capable of (i) measuring a distance as short as several ten centimeters, (ii) measuring the distance from a vehicle to another vehicle, the latter being at a stop relatively to the former and an on-vehicle radar installed on the former, and (iii) measuring the distances to objects accurately even under the interference from other on-vehicle radars. The on-vehicle radars available at present do not meet these three conditions. In the circumstances, the development of an on-vehicle radar capable of meeting the three conditions is hoped for.

## DISCLOSURE OF INVENTION

According to the first feature of the present invention, there is provided a distance-measuring device for measuring the distance to an object. The distance-measuring device comprises (i) a frequency-controlling means which outputs a frequency-control signal whose frequency is changing, (ii) a transmitting means which is connected to the frequency-controlling means and sends out an electromagnetic wave, whose frequency is the same as the frequency of the frequency-control signal, into a propagating medium between itself and the object, toward the object, (iii) a detecting means which is provided between the transmitting means and the object, detects the amplitude of a standing wave formed in the propagating medium, and outputs an amplitude signal corresponding to the detected amplitude, and (iv) a signal-processing unit which receives information about the frequency of the frequency-control signal and the amplitude signal, forms a frequency-amplitude function representing the relation between the frequency of the frequency-control signal and the value of the amplitude signal, and calculates the distance between the detecting means and the object by using the period of the frequency-amplitude function.

According to the second feature of the present invention, there is provided a distance-measuring device for measuring the distance to an object. The distance-measuring device comprises (i) a frequency-controlling means which outputs a frequency-control signal whose frequency is changing, (ii) a transmitting means which is connected to the frequency-controlling means and sends out an electromagnetic wave, whose frequency is the same as the frequency of the frequency-control signal, into a propagating medium between itself and the object, toward the object, (iii) a detecting means which is provided between the transmitting means and the object, detects the amplitude of a standing wave formed in the propagating medium, and outputs an amplitude signal corresponding to the detected amplitude, and (iv) a signal-processing unit which receives information about the frequency of the frequency-control signal and the amplitude signal, forms a frequency-amplitude function representing the relation between the frequency of the frequency-control signal and the value of the amplitude signal, finds two or more frequencies $f_n$ to $f_{n+k}$ of the frequency-control signal minimizing or maximizing the value of the frequency-amplitude function, chooses the two frequencies $f_n$ and $f_{n+k}$, finds the number "$k - 1$" of frequencies minimizing or maximizing the value of the frequency-amplitude function between the frequencies $f_n$ and $f_{n+k}$, and calculates the distance between the detecting means and the object by using the frequencies $f_n$ and $f_{n+k}$ and the number "$k$ 1".

According to the third feature of the present invention, there is provided the distance-measuring device of the second feature. The distance-measuring device further comprises a modulator for the frequency modulation of the frequency-control signal. Its detecting means includes (i) a receiving unit which detects the amplitude of the standing wave and outputs an amplitude signal corresponding to the amplitude, and (ii) a wave-detecting unit which receives a frequency-modulation signal from the modulator, does the synchronous detection of the amplitude signal by using the frequency-modulation signal to form a demodulated signal, and outputs an amplitude signal corresponding to the amplitude of the demodulated signal.

According to the fourth feature of the present invention, there is provided a distance-measuring device for measuring the distance to an object. The distance-measuring device comprises (i) a light source which emits a light beam (hereinafter the "original beam") whose intensity is changing periodically with changing frequency, (ii) a light-splitting means which splits the original beam into two beams and directs one beam after split to the object through a propagating medium between itself and the object, (iii) a means which causes the reflection of the beam after split directed to the object and the other beam after split to interfere with each other to become a standing wave, (iv) a detecting means which detects the amplitude of the standing wave and outputs an amplitude signal corresponding to the amplitude, and (v) a signal-processing unit which receives information about the frequency of the periodic change of intensity of the original beam and the amplitude signal, forms a frequency-amplitude function representing the relation between the frequency of periodic change of intensity of the original beam and the value of the amplitude signal, and calculates the distance between the detecting means and the object by using the period of the frequency-amplitude function.

According to the fifth feature of the present invention, there is provided a distance-measuring device for measuring the distance to an object. The distance-measuring device comprises (i) a light source which emits a light beam (hereinafter the "original beam") whose intensity is changing periodically with changing frequency, (ii) a light-splitting means which splits the original beam into two beams and directs one beam after split to the object through a propagating medium between itself and the object, (iii) a means which causes the reflection of the beam after split directed to the object and the other beam after split to interfere with each other to become a standing wave, (iv) a detecting means which detects the amplitude of the standing wave and outputs an amplitude signal corresponding to the amplitude, and (v) a signal-processing unit which receives information about the frequency of periodic change of intensity of the original beam and the amplitude signal, forms a frequency-amplitude function representing the relation between the frequency of periodic change of intensity of the original beam and the value of the amplitude signal, finds two or more frequencies $f_n$ to $f_{n+k}$ of periodic change of intensity of the original beam minimizing or maximizing the value of the frequency-amplitude function, chooses the two frequencies $f_n$ and $f_{n+k}$, finds the number "$k - 1$" of frequencies minimizing or maximizing the value of the frequency-amplitude function between the frequencies $f_n$ and $f_{n+k}$, and calculates the distance between the detecting means and the object by using the frequencies $f_n$ and $f_{n+k}$ and the number "$k - 1$".

According to the sixth feature of the present invention, there is provided the distance-measuring device of the fifth feature. The distance-measuring device further comprises a modulator for the frequency modulation of the periodic change of intensity of the original beam. Its detecting means includes (i) a receiving unit which detects the amplitude of the standing wave and outputs an amplitude signal corresponding to the amplitude, and (ii) a wave-detecting unit which receives a frequency-modulation signal from the modulator, does the synchronous detection of the amplitude signal by using the frequency-modulation signal to form a demodulated signal, and outputs an amplitude signal corresponding to the amplitude of the demodulated signal.

According to the seventh feature of the present invention, there is provided a distance-measuring device for measuring the distance to an object. The distance-measuring device comprises (i) a plurality of distance-measuring devices of claim 1, 2, 3, 4, 5 or 6, (ii) a controller which controls the distance-measuring devices for their synchronous operation, and (iii) an arithmetic-processing unit which the distance from each distance-measuring device to the object found by said device is inputted into and calculates the coordinates of the object based on the inputted distances and the relative positions of the distance-measuring devices.

According to the eighth feature of the present invention, there is provided a method of measuring the distance to an object. The method comprises the steps of (i) sending out an electromagnetic wave from a transmitting means into a propagating medium between the transmitting means and the object, toward the object, to form a standing wave between the transmitting means and the object, (ii) detecting the amplitude of the standing wave with a detecting means disposed at a point between the transmitting means and the object, (iii) changing the frequency of the electromagnetic wave and forming a frequency-amplitude function which represents the relation between the frequency of the electromagnetic wave and the amplitude of the standing wave, and (iv) calculating the distance between the detecting means and the object by using the period of the frequency-amplitude function.

BRIEF DESCRIPTION OF DRAWINGS

The features and advantages of the present invention will become more clearly appreciated from the following description in conjunction with the accompanying drawings, in which:

Fig. 1 is a schematic block diagram of an embodiment of distance-measuring device of the present invention;

Fig. 2 (A) is an illustration of a frequency-amplitude function $A$ $(f, d_1)$ formed in the process of calculating the distance to an object, Fig. 2 (B) is an illustration of the period function $F$ $(cy)$ which the frequency-amplitude function was transformed into through Fourier transformation, and Fig. 2 (C) is an illustration of a period function $F$ $(cy)$ regarding three objects;

Fig. 3 is a flowchart of the procedure for measuring the distance to an object with the distance-measuring device of Fig. 1;

Fig. 4 also is a flowchart of the procedure for measuring the distance to an object with the distance-measuring device of Fig. 1;

Fig. 5 is a schematic block diagram of another embodiment of distance-measuring device of the present invention;

Fig. 6 (A) shows the relation between the frequency of an progressive wave emitted from the distance-measuring device of Fig. 5 and the amplitude of a standing wave created by the progressive wave, the amplitude measured at the point of the receiving unit of the distance-measuring device, and Fig. 6 (B) is an illustration of the frequency-amplitude function $A$ $(f, d_1)$ subsequently formed;

Fig. 7 is a flowchart of the procedure for measuring the distance to an object with the distance-measuring device of Fig. 5;

Fig. 8 is an explanatory illustration of creation of a standing wave;

Fig. 9 is a schematic block diagram of a distance-measuring device according to the present invention capable of measuring distances along a transmission line;

Fig. 10 is a schematic block diagram of still another embodiment of distance-measuring device of the present invention;

Fig. 11 is a schematic block diagram of an embodiment of distance-measuring equipment of the present invention; and

Fig. 12 (A) is an explanatory illustration of the method of measuring the distance to an object with the distance-measuring equipment of Fig. 11, and Fig. 12 (B) shows equations for the calculation of distance.

BEST MODE FOR CARRYING OUT THE INVENTION

Referring to the drawings, a preferred embodiment of distance-measuring device of the present invention will now be described.

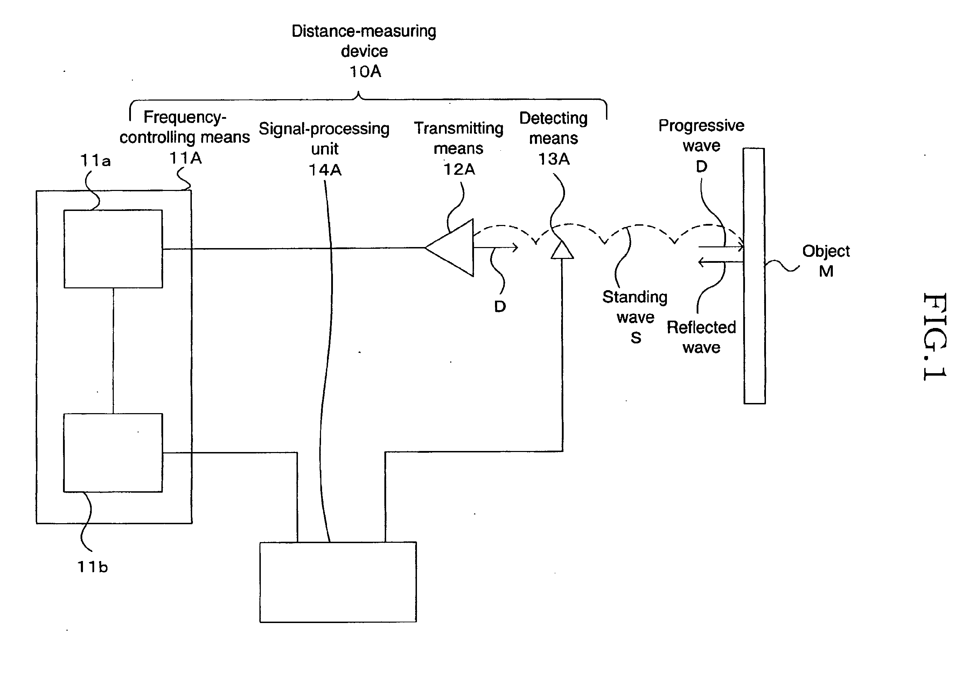

In Fig. 1, the reference sign 10A is the distance-measuring device, which basically comprises a frequency-controlling means 11A, a transmitting means 12A, a detecting means 13A, and a signal-processing unit 14A. The distance-measuring device 10A is characterized by measuring the distance to an object M by using a standing wave S formed between the transmitting means 12A and the object M.

Before the distance-measuring device 10A is described, the standing wave S will be described.

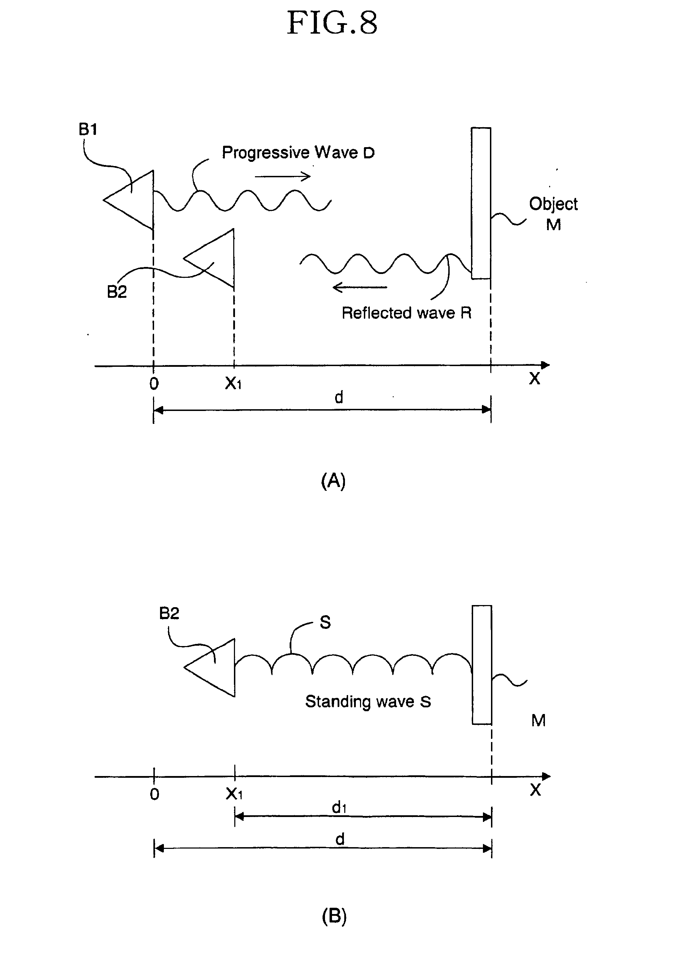

As shown in Fig. 8, an electromagnetic-wave generator B1 emits an electromagnetic wave with frequency $f$ into a propagating medium such as air. The electromagnetic wave travels through the medium as a progressive wave D with frequency $f$. The amplitude $VD$ of the progressive wave D at a distance $x$ from the electromagnetic-wave generator B1 is a function of $f$ and $x$, which is represented by

$$VD\ (f,\ x) = \exp\ (j2\pi f/c \cdot x)$$

where $c$ stands for the velocity of light.

When the progressive wave D reaches the object M, it is reflected by the object M to become a reflected wave R, which travels toward the electromagnetic-wave generator B1. The amplitude $VR$ of the reflected wave R at a distance $x$ from the electromagnetic-wave generator B1 is a function of $f$ and $x$, which is represented by

$$VR\ (f,\ x) = MR \cdot \exp\ \{(j2\pi f/c \cdot (2d\text{-}x)\}$$

$$MR = \gamma \cdot \exp\ (j\varphi)$$

where $MR$ is the coefficient of reflection of the electromagnetic wave from the object M.

As shown in Fig. 8 (B), when the reflected wave R interferes with the progressive wave D, a standing wave S is formed between the electromagnetic-wave generator B1 and the object M. The amplitude $SP$ of the standing wave S measured by a detector B2 located nearer to the object M than the electromagnetic-wave generator B1 by a distance $x_1$ is a function of $f$, which is represented by

$$SP\ (f, x_1) = \{1 + \gamma^2 + 2\gamma \cdot \cos\ (2\pi f/c \cdot 2d_1\ + \varphi)\}^{1/2}$$

$$d_1 = d - x_1$$

As indicated by the above expression, the amplitude $SP$ of the standing wave S at the point of the detector B2 changes periodically while the frequency $f$ of the progressive wave D is changed, and the period of periodic change of amplitude $SP$ of the standing wave S at the point of the detector B2 (at a distance $d_1$ from the object M) is $c/2d_1$. Namely, the period of periodic change of the amplitude *SP* of the standing wave S is in inverse proportion to the distance $d_1$ between the detector B2 and the object M. Therefore, the distance $d_1$ between the detector B2 and the object M can be calculated by changing the frequency $f$ of the progressive wave D and finding the period of periodic change of the standing wave S at the point of the detector B2.

Now the distance-measuring device 10A will be described.

As shown in Fig. 1, the frequency-controlling means 11A comprises a signal-output unit 11a and a frequency-control unit 11b. The signal-output unit 11a is a unit, such as an AC power supply, capable of outputting a signal of a certain frequency $f$. The frequency-control unit 11b controls the frequency $f$ of the frequency-control signal and outputs information about the frequency $f$ of the frequency-control signal such as the value $f$ or a signal of the same frequency $f$.

Connected to the frequency-controlling means 11A is the transmitting means 12A, which comprises an antenna, an amplifier, and so on. The transmitting means 12A emits an electromagnetic wave, whose frequency is the same as the frequency $f$ of the frequency-control signal, into such a medium as air or water or into a vacuum between the transmitting means 12A and the object M.

Accordingly, the frequency of the electromagnetic wave being emitted by the transmitting means 12A is changed by changing the frequency $f$ of the frequency-control signal by means of the frequency-control unit 11b.

Provided between the transmitting means 12A and the object M is the detecting means 13A, which comprises an antenna, an amplitude detector, and so on. The detecting means 13A detects the amplitude *SP* of a standing wave S, which is formed by the interference between the electromagnetic wave (hereinafter referred to as "progressive wave D") being emitted by the transmitting means 12A and the reflection (hereinafter referred to as "reflected wave R") of the progressive wave D by the object M. The detecting means 13A is situated at a distance $d_1$ from the object M. The detecting means 13A outputs an amplitude signal in proportion to *SP* or the square of *SP* of the standing wave S.

Connected to the detecting means 13A is the signal-processing unit 14A, which comprises a digital signal processor (DSP), a memory, and so on. The signal-processing unit 14A has a storage unit for storing inputted data and an arithmetic-processing unit for calculating the distance $d_1$ between the detecting means 13A and the object M.

Connected to the frequency-control unit 11b too, the signal-processing unit 14A receives information about the frequency $f$ of the frequency-control signal and sends a receipt-confirmation signal to the frequency-control unit 11b when the value of the amplitude signal from the detecting means 13A has changed. The transmitting means 12A and the detecting means 13A may be integrated into a single unit with an antenna. In this case, the distance-measuring device 10A becomes more compact; its structure, simpler.

Now the working and effect of the distance-measuring device 10A will be described.

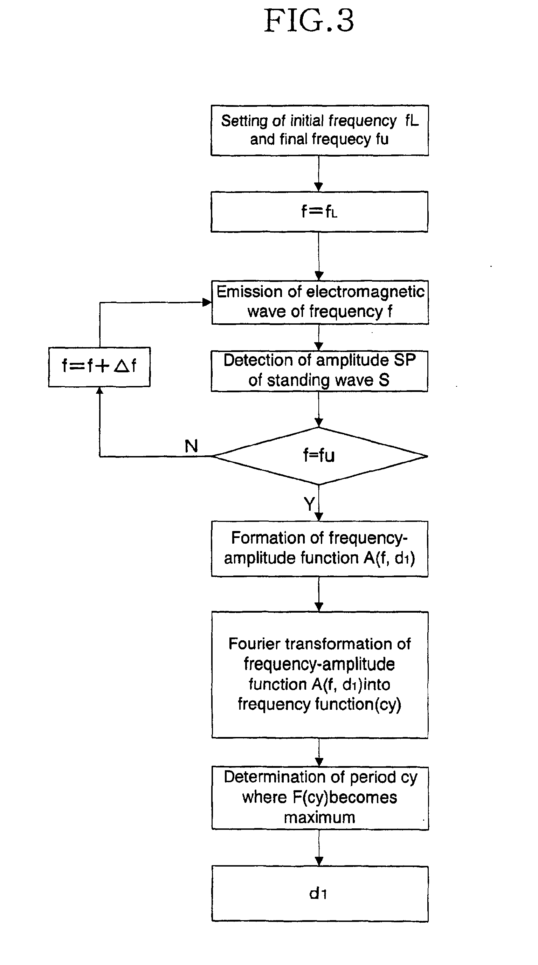

As shown in Figs. 1 to 3, the initial frequency $f_L$ and the final frequency $f_U$ of the frequency-control signal of the signal-output unit 11a are set by the frequency-control unit 11b.

Then, the frequency-control unit 11b causes the signal-output unit 11a to output a frequency-control signal of frequency $f_L$. Upon the receipt of the frequency-control signal, the transmitting means 12A emits a progressive wave D of the same frequency $f_L$ into the propagating medium, toward the object M. At the same time, information about the frequency $f$ of the frequency-control signal is sent from the frequency-control unit 11b to the signal-processing unit 14A. The progressive wave D travels through the propagating medium, reaches the object M, and reflected by the object M to become a reflected wave R. The reflected wave R travels through the propagating medium toward the transmitting means 12A, in the direction opposite to that of the progressive wave D. Accordingly, the progressive wave D and the reflected wave R interfere with each other to become a standing wave S in the propagating medium between the transmitting means 12A and the object M.

The amplitude *SP* of the standing wave S is detected by the detecting means 13A provided between the transmitting means 12A and the object M, and the detecting means 13A sends the signal-processing unit 14A a signal (hereinafter the "amplitude signal") corresponding to the amplitude *SP* of the standing wave S.

Upon the receipt of the amplitude signal from the detecting means 13A, the storage unit of the signal-processing unit 14A stores the value *P* of the amplitude signal, linking the value *P* to the information about the frequency $f$ of the frequency-control signal. At the same time, the signal-processing unit 14A sends a receipt-confirmation signal to the frequency-control unit 11b.

Upon the receipt of the receipt-confirmation signal from the signal-processing unit 14A, the frequency-control unit 11b changes the frequency $f$ of the frequency-control signal by $\Delta f$; accordingly, the frequency $f$ of the progressive wave D changes from $f_L$ to $f_L + \Delta f$, which causes the wavelength of the progressive wave D to change because the propagation velocity of the progressive wave D (the velocity of the light) remains the same.

Therefore, the waveform, including the amplitude *SP*, of the standing wave S changes and hence the value *P* of the amplitude signal being sent from the detecting means 13A to the signal-processing unit 14A changes. The storage unit of the signal-processing unit 14A stores the changed value *P* of the amplitude signal, linking the changed value *P* to the changed information

about the frequency $f$ of the frequency-control signal.

Then, upon the receipt of a receipt-confirmation signal from the signal-processing unit 14A, the frequency-control unit 11b changes the frequency $f$ of the frequency-control signal of the signal-output unit 11a by $\Delta f$ again.

The above procedure is repeated until the frequency $f$ of the frequency-control signal reaches the final frequency $F_U$ and then the signal-output unit 11a is turned off.

Next, the arithmetic-processing unit of the signal-processing unit 14A forms a frequency-amplitude function $A$ $(f, d_1)$ based on the pieces of information about the frequency $f$ of the frequency-control signal and the values $P$ of the amplitude signal both stored in the storage unit of the signal-processing unit 14A and then transforms the frequency-amplitude function $A$ ($f$, $d_1$) into a period function $F$ ($cy$) through Fourier transformation. Because the period function $F$ $(cy)$ has a peak at the period $cy$ of the frequency-amplitude function $A$ ($f$, $d_1$), the signal-processing unit 14A finds the period $cy$ from the period function $F$ $(cy)$.

As described earlier, the period $cy$ of the frequency-amplitude function $A$ $(f, d_1)$, namely, the period of periodic change of the amplitude of the standing wave S is in inverse proportion to the distance $d_1$ between the detecting means 13A and the object M; therefore, the distance $d_1$ can be calculated from the period cy.

Thus, the distance-measuring device 10A is capable of measuring the distance $d_1$ between the detecting means 13A and the object M.

Besides, the distance $d_1$ between the detecting means 13A and the object M is determined by the period of periodic change of the amplitude of the standing wave S alone and is irrelevant to the time necessary for the progressive wave D to advance from the transmitting means 12A, be reflected by the object M, and return to the detecting means 13A; therefore, if the distance $d_1$ to the object M is as short as several ten centimeters, the distance can be measured accurately.

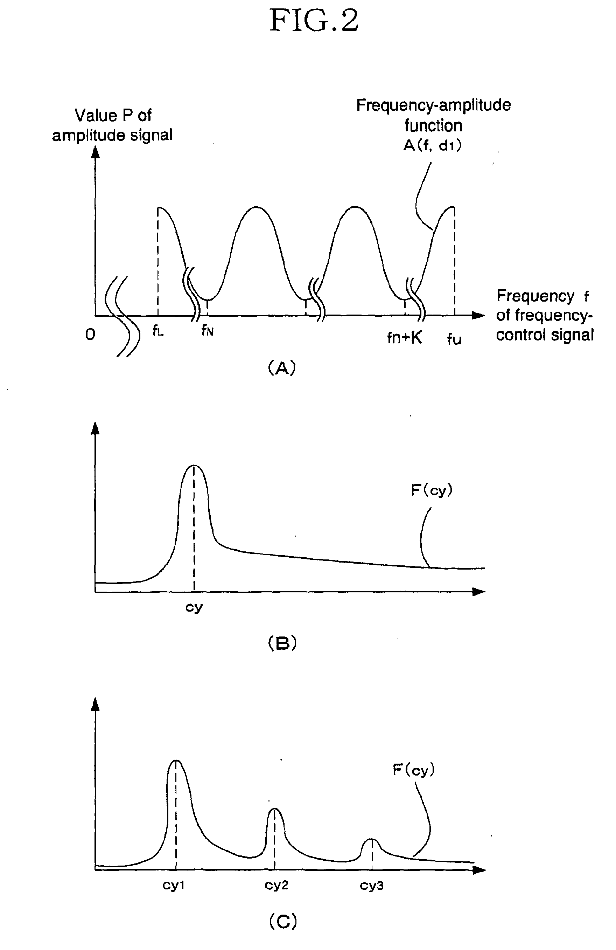

If there are formed a plurality of standing waves S's between the transmitting means 12A and a plurality of objects M's, the detecting means 13A outputs an amplitude signal corresponding to the composite value of the amplitudes SP's of the standing waves S's. Accordingly, the frequency-amplitude function $A$ ($f$, $d_1$) formed by the arithmetic-processing unit of the signal-processing unit 14A is a composite function composed of the functions showing the periodic changes of amplitudes of standing waves S's relatively to the change of the frequency $f$ of the frequency-control signal of the signal-output unit 11a, and the period function $F$ ($cy$) formed by the Fourier transformation of the frequency-amplitude function $A$ ($f$, $d_1$) has a peak at the period of each standing wave S [see Fig. 2 (c)].

Accordingly, the respective periods of periodic changes of the amplitudes of the standing waves S's can be found and hence the respective distances between the detecting means 13A and the objects M's can be measured.

Besides, instead of changing the frequency $f$ of the frequency-control signal of the signal-output unit 11a from the initial frequency $f_L$ to the final frequency $f_U$ by using a certain increment $\Delta f$, it may be changed at random between $f_L$ and $f_U$ to measure the changing amplitude of the standing wave S and form a frequency-amplitude function $A$ ($f$, $d_1$).

If the frequency $f$ of the frequency-control signal of the signal-output unit 11a is changed at random in accordance with the M-series code or the like, two or more distance-measuring devices 10A located near to each other are prevented from emitting electromagnetic waves of the same frequency and phase at the same time.

Besides, the amplitude $SP$ of a standing wave S is caused by elements of one and the same frequency; therefore, if the detecting means 13A of a distance-measuring device 10A receives the electromagnetic wave emitted by another distance-measuring device, the elements of the electromagnetic wave can easily be removed with a low-pass filter or the like.

Accordingly, the measuring accuracy of the distance-measuring device 10A is not disturbed by electromagnetic waves from other distance-measuring devices, and the distance-measuring device 10A is capable of measuring distances even under interference by other distance-measuring devices.

The distance $d_1$ between the detecting means 13A and the object M may be calculated from two or more frequencies $f$ of the frequency-control signal of the signal-output unit 11a which minimize or maximize the value of the frequency-amplitude function $A$ ($f$, $d_1$).

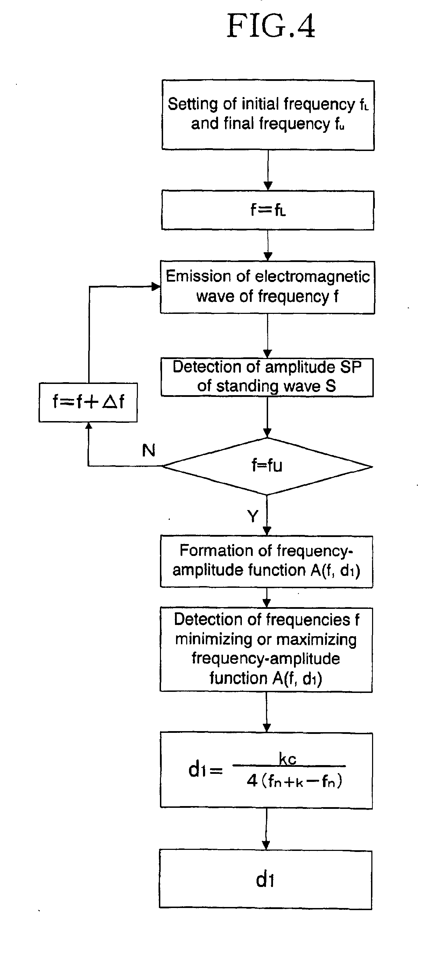

As shown in Fig. 4, after finding a frequency-amplitude function $A$ ($f$, $d_1$), the signal-processing unit 14A finds two or more frequencies $f_n$ to $f_{n+k}$ of the frequency-control signal which minimize or maximize the value of the function.

Next, the signal-processing unit 14A chooses frequencies $f_n$ and $f_{n+k}$ out of those $f_n$ to $f_{n+k}$ and calculates the number "$k$ - 1" of frequencies minimizing or maximizing the value of the frequency-amplitude function $A$ ($f$, $d_1$) between the frequencies $f_n$ and $f_{n+k}$.

Then, the distance $d_1$ between the detecting means 13A and the object M is given by the following equation.

$$d_1 = k \cdot c / \{4 (f_{n+k}\ f_n)\}$$

Thus, the distance $d_1$ between the detecting means 13A and the object M is calculated by choosing two frequencies $f_n$ and $f_{n+k}$ and calculating the number "$k$ - 1" of frequencies minimizing or maximizing the value of the frequency-amplitude function $A$ ($f$, $d_1$) between the chosen frequencies.

Now another embodiment of distance-measuring device according to the present invention will be described.

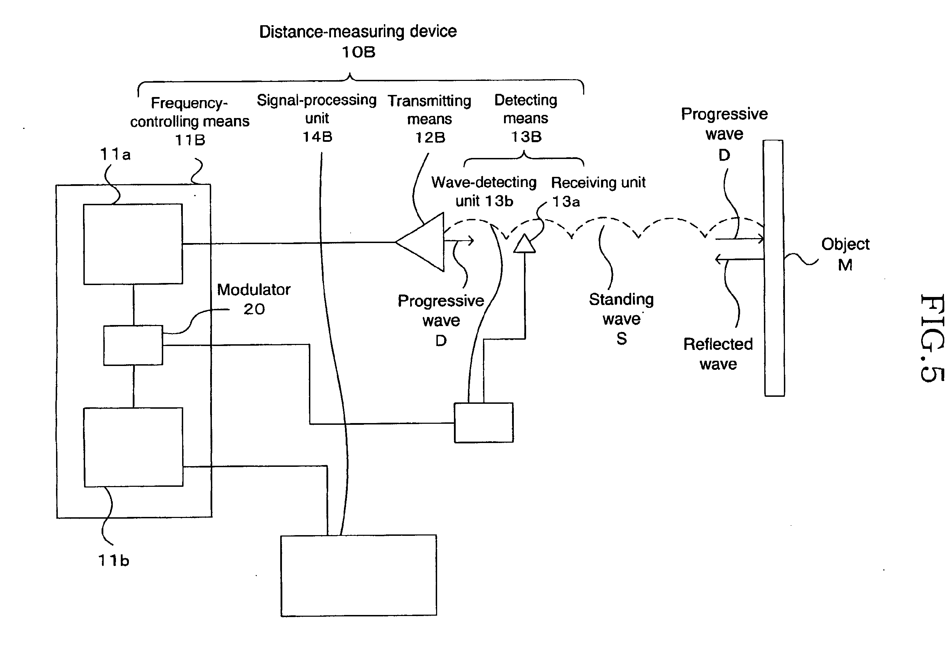

In Fig. 5, the reference sign 10B is the distance-measuring device, which comprises a modulator 20 in addition to a frequency-controlling means 11B including a signal-output unit 11a and a frequency-control unit 11b, a transmitting means 12B, a detecting means 13B, and a signal-processing unit 14B. The feature of the distance-measuring device 10B is the modulator 20 which enhances the accuracy of the signal-processing unit 14B in detecting the frequencies f of the frequency-control signal of the signal-output unit 11a which minimize or maximize the value of the frequency-amplitude function $A (f, d_1)$.

As shown in Fig. 5, the modulator 20 is provided between the signal-output unit 11a and the frequency-control unit 11b. If the frequency-control unit 11b sets the frequency-control signal of the signal-output unit 11a for a frequency of $f$, the modulator 20 changes the frequency of the frequency-control signal around the set value $f$ periodically. In other words, the modulator 20 does the frequency modulation of the frequency-control signal of the signal-output unit 11a.

Besides, the modulator 20 sends a frequency-modulation signal to the detecting means 13B. The frequency-modulation signal represents the periodically changing component of the frequency-control signal of the signal-output unit 11a.

The detecting means 13B comprises a receiving unit 13a and a wave-detecting unit 13b.

The receiving unit 13a detects the amplitude of a standing wave S to be formed between the transmitting means 12B and an object M and outputs an amplitude signal corresponding to the amplitude.

The receiving unit 13a is connected to the wave-detecting unit 13b. The wave-detecting unit 13b comprises a storage unit and an arithmetic-processing unit. The storage unit of the wave-detecting unit 13b stores the value of the amplitude signal sent from the receiving unit 13a. The arithmetic-processing unit of the wave-detecting unit 13b does synchronous wave detection of the amplitude signal by using the frequency-modulation signal to form a demodulated signal and outputs an amplitude signal corresponding to the amplitude of the demodulated signal.

Upon the receipt of the amplitude signal from the receiving unit 13a, the wave-detecting unit 13b sends a receipt-confirmation signal to the modulator 20.

The transmitting means 12B and the detecting means 13B may be integrated into a single unit with an antenna. In this case, the distance-measuring device 10B becomes more compact; its structure, simpler.

Now the working and effect of the distance-measuring device 10B will be described.

As the distance-measuring device 10B finds frequencies of the frequency-control signal minimizing or maximizing the value of the detected-signal function $A (f, d_1)$ in the same way as the distance-measuring device 10A, the frequency modulation and demodulation alone will be described below.

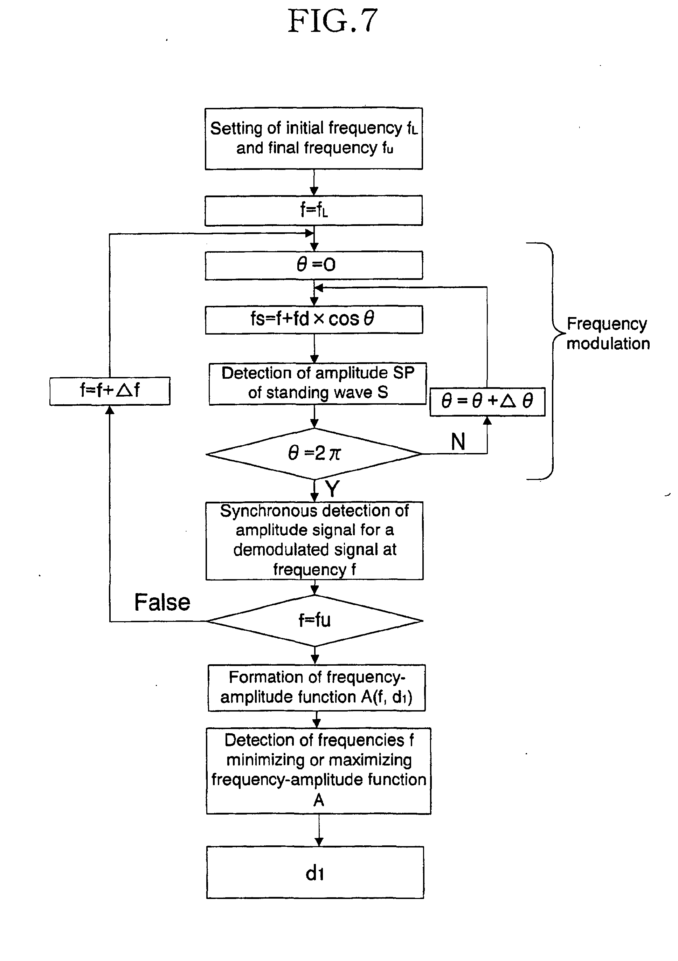

As shown in Figs. 5 to 7, the frequency-control unit 11b sets the frequency-control signal of the signal-output unit 11a for a frequency of $f$. The modulator 20 frequency-modulates the frequency-control signal, and the signal-output unit 11a outputs a frequency-control signal of frequency $f + f \cdot d \cdot \cos \theta$ ($\theta = 0$). Upon the receipt of the frequency-control signal from the signal-output unit 11a, the transmitting means 12B emits a progressive wave D of the same frequency $f + f \cdot d \cdot \cos \theta$ ($\theta = 0$) into a propagating medium between the transmitting means 12B and an object M, toward the object M. At the same time, the modulator 20 sends a frequency-modulation signal to the wave-detecting unit 13b of the detecting means 13B.

Then, a standing wave S is formed between the transmitting means 12B and the object M. The amplitude $SP$ of the standing wave S at the point of the receiving unit 13a is detected by it and an amplitude signal corresponding to the amplitude $SP$ is sent to the wave-detecting unit 13b.

Upon the receipt of the amplitude signal from the receiving unit 13a, the wave-detecting unit 13b stores the value $P$ of the amplitude signal, linking the value $P$ to the frequency-modulation signal sent from the modulator 20. At the same time, the wave-detecting unit 13b sends a receipt-confirmation signal to the modulator 20.

Upon the receipt of the receipt-confirmation signal from the wave-detecting unit 13b, the modulator 20 changes the frequency of the frequency-control signal to $f + f \cdot d \cdot \cos \theta$ ($\theta = \theta + \Delta\theta$). Accordingly, the frequency of the progressive wave D changes to $f + f \cdot d \cdot \cos \theta$ ($\theta = \theta + \Delta\theta$), which causes the amplitude $SP$ of the standing wave S to change, which causes the value $P$ of the amplitude signal being sent out by the receiving unit 13a to change. The storage unit of the wave-detecting unit 13b stores the changed value $P$ of the amplitude signal, linking the changed value $P$ to the changed frequency-modulation signal being sent from the modulator 20.

Upon the receipt of a receipt-confirmation signal from the wave-detecting unit 13b again, the modulator 20 changes the frequency of the frequency-control signal to $f + f \cdot d \cdot \cos \theta$ ($\theta = \theta + 2\Delta\theta$).

The above procedure is repeated until $\theta$ becomes $2\pi$.

When $\theta$ becomes $2\pi$, an arithmetic-processing unit of the wave-detecting unit 13b does the synchronous detection of the amplitude signal by using the frequency-modulation signal to form a demodulated signal and sends the signal-processing unit 14B an amplitude signal corresponding to the amplitude of the demodulated signal. The storage unit of the signal-processing unit 14B stores the value of the amplitude signal, linking the value to information about the frequency $f$ of the frequency-control signal sent from the frequency-control unit 11b to the signal-processing unit 14B.

Then, after the frequency-control unit 11b has changed the frequency $f$ of the frequency-control signal of the signal-output unit 11a from an initial frequency $f_L$ to a final frequency $f_U$, the arithmetic-processing unit of the signal-processing unit 14B forms a frequency-amplitude function $A(f, d_1)$.

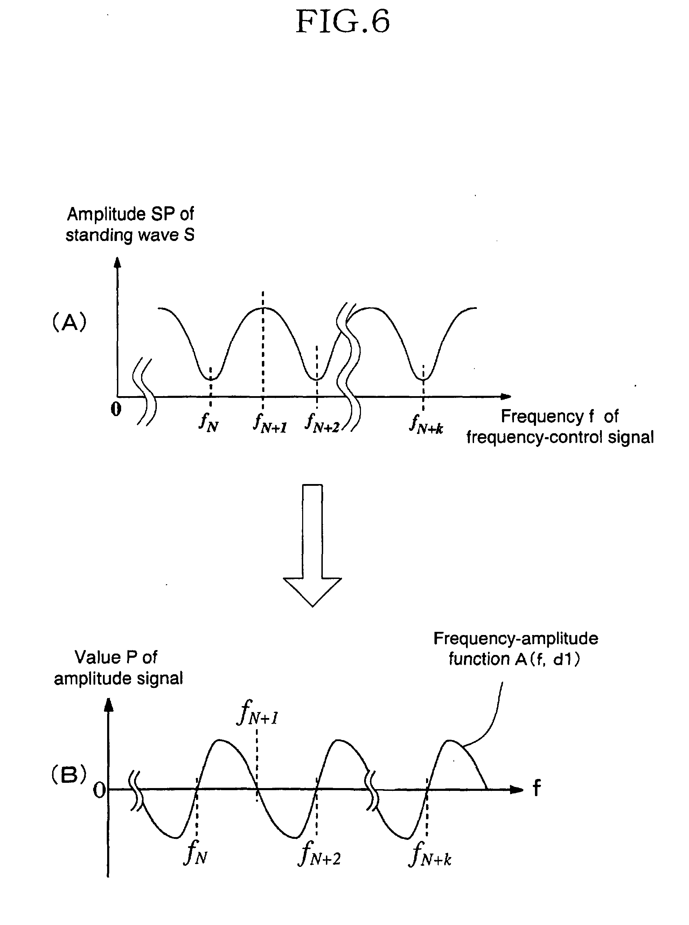

As shown in Fig. 6, the value of the frequency-amplitude function $A(f, d_1)$ increases or decreases monotonously in the vicinity of each of the frequencies minimizing or maximizing the amplitude $SP$ of the standing wave S. Besides, the value P of the frequency-amplitude function $A(f, d_1)$ changes from plus to minus or from minus to plus in the vicinity of each of the frequencies minimizing or maximizing the amplitude $SP$ of the standing wave S.

Accordingly, the distance-measuring device 10B is accurate in detecting the frequencies minimizing or maximizing the amplitude $SP$ of the standing wave S and hence is accurate in measuring the distance to the object M.

If the invention embodied in the above distance-measuring devices 10A and 10B is applied to industrial machinery such as robots and NC machines, the distances to operating machines can be measured.

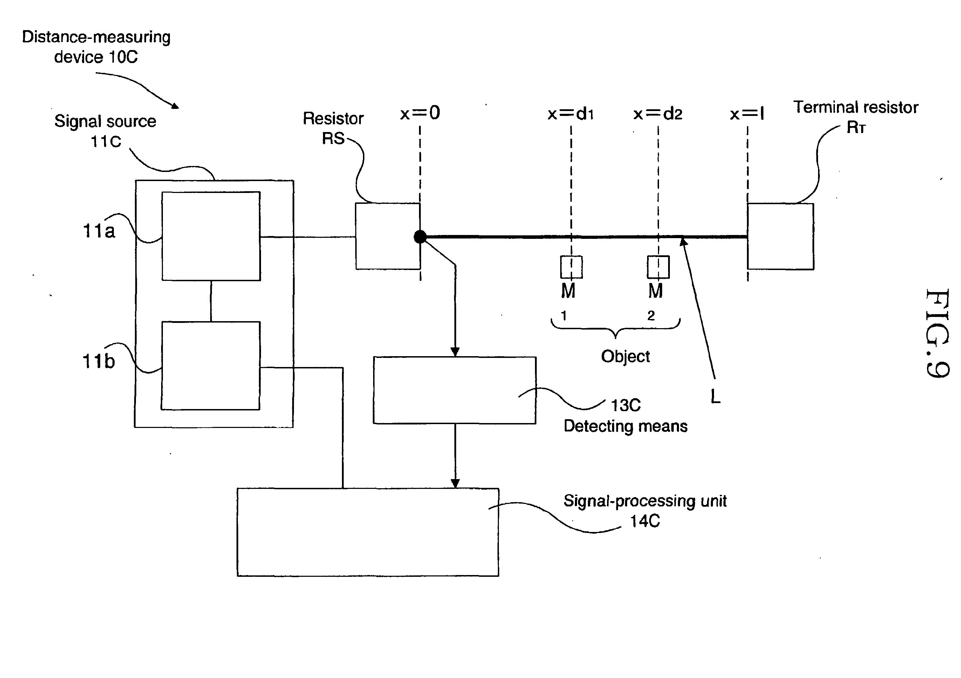

In Fig. 9, the reference sign "L" is a signal-transmission line consisting of parallel wires such as micro split lines to send signals to operating machines. Operating machines M1 and M2 are arranged along the signal-transmission line L. Each of the operating machines M1 and M2 has a metal piece in the vicinity of the signal-transmission line L. A signal source 11C such as an AC power supply feeds AC power to the signal-transmission line L through a resistor RS. The electric field created by the AC current is disturbed in the vicinities of the metal pieces of the operating machines M1 and M2. Thus, a standing waves S's are formed between the resistor RS and the operating machines M1 and M2. The frequency of the signal source 11C is changed, and a detecting means 13C such as a square-law wave detector detects the power of the AC current. Then, a signal-processing unit 14C calculates the distances along the signal-transmission line L from the detecting means 13C to the operating machines M1 and M2.

If the signal-transmission line L is curved, the distances along the curved line L to the operating machines M1 and M2 can be measured accurately because the standing wave S is formed along the curved line L.

If a mismatching terminal resistor $R_T$ is provided on the distal end of the signal-transmission line L, a standing wave S is formed between the resistor RS and the terminal resistor $R_T$. Accordingly, the overall length of the signal-transmission line L can be measured. Therefore, the measured distances to the operating machines M1 and M2 can be corrected by comparing the actual overall length and the measure one of the signal-transmission line L. Thus, the measuring accuracy improves.

Now still another embodiment of distance-measuring device according to the present invention will be described.

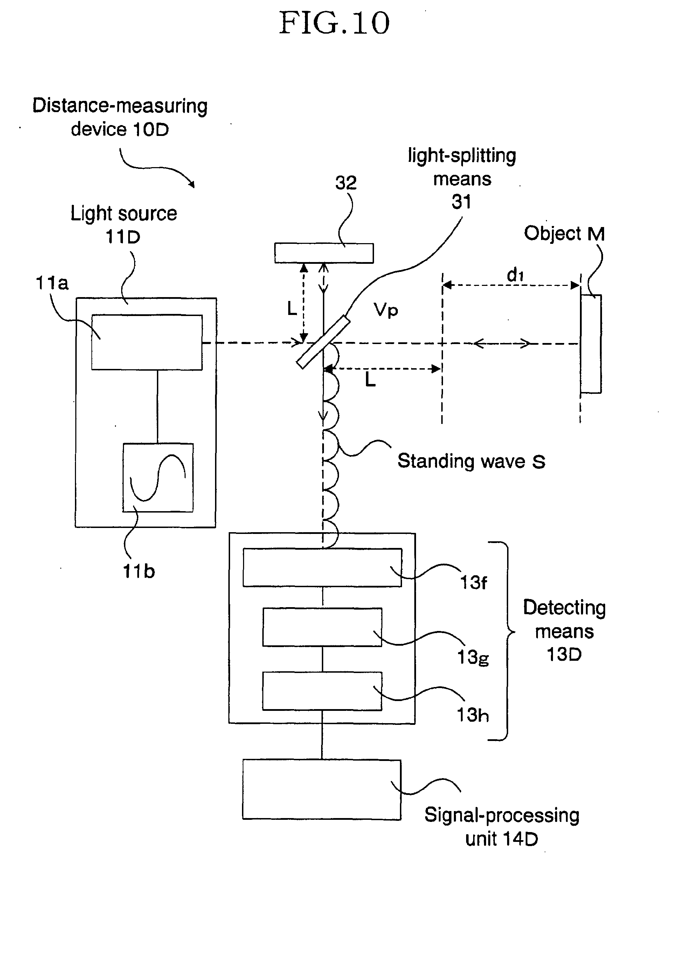

In Fig. 10, the reference sign 10D is the distance-measuring device, which comprises a light source 11D, a light-splitting means 31, a mirror 32, a detecting means 13D, and a signal-processing unit 14D. Unlike the frequency-controlling means 11A and 11B of the distance-measuring devices 10A and 10B, the light source 11D of the distance-measuring device 10D emits a light beam whose intensity is periodically changed with changing frequency, and the device 10D measures the distance to an object M by using a standing wave S formed between the light-splitting means 31 and the detecting means 13D.

As the method of the distance-measuring device 10D for calculating the distance to an object M based on the amplitude of the standing wave S detected by the detecting means 13D is the same as those of the distance-measuring devices 10A and 10B, only the construction of the distance-measuring device 10D will be described below.

As shown in Fig. 10, the light source 11D comprises a signal-output unit 11a and a frequency-control unit 11b. The signal-output unit 11a is a laser, a light-emitting diode, or the like which is capable of emitting a light beam (hereinafter the "original beam") whose intensity changes periodically at a certain frequency $f$. The frequency-control unit 11b controls the frequency $f$ of the original beam and outputs information about the frequency $f$ of the original beam such as the value $f$ or a signal of the same frequency $f$.

Provided between the signal-output unit 11a and the object M is the light-splitting means 31 such as a beam splitter. The light-splitting means 31 splits the original beam into two beams. One (hereinafter the "beam 1/2") of the two beams after split is directed to the object M; the other (hereinafter the "beam 2/2"), to the mirror 32.

The beam 1/2 is reflected by the object M and returns to the light-splitting means 31, which reflects the beam 1/2 toward the detecting means 13D. The mirror 32 is disposed on one side of the light-splitting means 31. The beam 2/2 is reflected by the mirror 32, and the reflected beam 2/2 returns to and penetrates the light-splitting means 31 toward the detecting means 13D.

Accordingly, the beams 1/2 and 2/2 interfere with each other between the light-splitting means 31 and the detecting means 13D to become a standing wave S. The detecting means 13D is disposed across the light-splitting means 31 from the mirror 32, and the detecting means 13D and the mirror 32 are disposed on a line orthogonal to the light-emitting direction of the signal-output unit 11a. The detecting means 13D detects the amplitude $SP$ of the standing wave S. The detecting means 13D is provided with a photo detector which detects the amplitude $SP$ of the standing wave S and converts the amplitude *SP* into an electric signal proportional to *SP* or the square of SP.

Connected to the detecting means 13D is the signal-processing unit 14D, which comprises a digital signal processor (DSP), a memory, and so on. The detecting means 13D has a storage unit for storing inputted data and an arithmetic-processing unit for processing the data in the storage unit to find the distance from the light-splitting means 31 to the object M.

Connected to the frequency-control unit 11b too, the signal-processing unit 14D receives information about the frequency *f* of the original beam from the frequency-control unit 11b Besides, the signal-processing unit 14D sends a receipt-confirmation signal to the frequency-control unit 11b when it has received an amplitude signal from the detecting means 13D.

Therefore, as in the case of the distance-measuring device 10A of the first embodiment, the distance-measuring device 10D is capable of measuring the distance *d* between the light-splitting means 31 and the object M.

Besides, if the distance *d* to the object M is as short as several ten centimeters, the distance *d* can be measured accurately.

Moreover, if the frequency *f* of the original beam is changed at random between an initial frequency $f_L$ and a final one $f_U$, the measuring accuracy of the distance-measuring device 10D is not disturbed by light beams from other distance-measuring devices, and the distance-measuring device 10D is capable of measuring distances even under interference by other distance-measuring devices.

Furthermore, because the distance-measuring device 10D is capable of calculating the periods of periodic changes of amplitudes of a plurality of standing waves S's, it is capable of measuring the distances to a plurality of objects M's at the same time.

In order to find two or more frequencies $f_n$ to $f_{n+k}$ minimizing or maximizing the value of the frequency-amplitude function $A(f, d_1)$ and calculate the distance *d* to the object M based on the frequencies $f_n$ to $f_{n+k}$, the frequency *f* of the original beam may be changed from an initial *frequency* $f_L$ of 0 Hz to a final frequency $f_U$. Whenever the frequency *f* of the original beam is 0 Hz, the value of the frequency-amplitude function $A(f, d_1)$ is maximum. Therefore, the distance *d* can be calculated just by finding another frequency maximizing the function in the range from above 0 Hz to the final frequency $F_U$.

If the distance-measuring device 10D is provided with a modulator for the frequency modulation of the original beam as in the case of the distance-measuring device 10B, frequencies minimizing or maximizing the frequency-amplitude function $A(f, d_1)$ are detected accurately and hence the error in measuring the distance to the object M is reduced.

Now a preferable embodiment of distance-measuring equipment according to the present invention will be described.

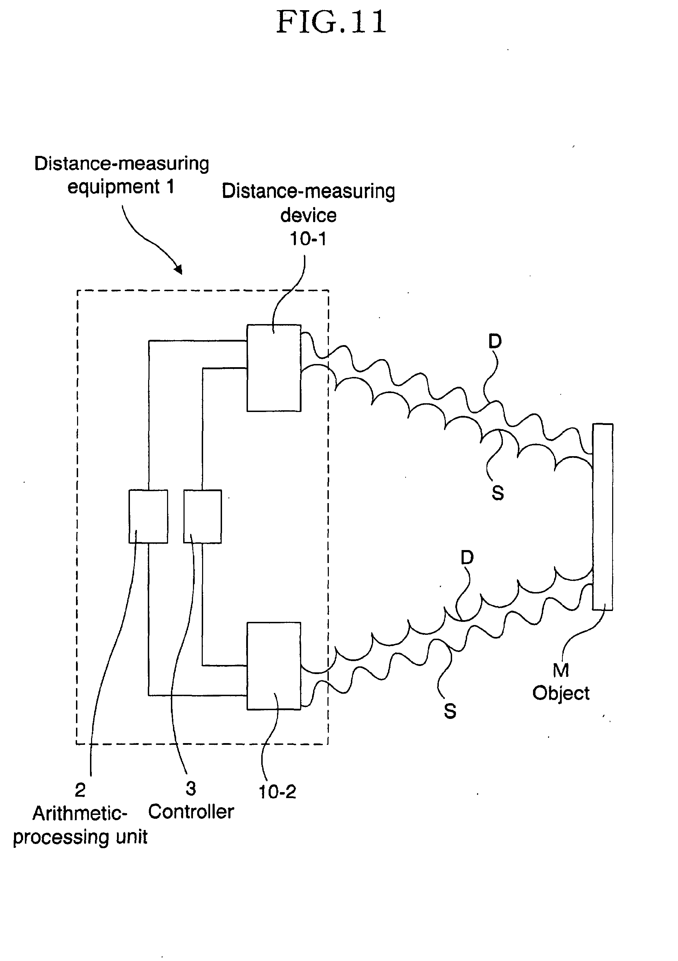

In Fig. 11, the reference numeral 1 indicates the distance-measuring equipment, which includes a plurality of distance-measuring devices 10's described earlier. Connected to the distance-measuring devices 10's is a controller 3, which controls the distance-measuring devices 10's for their synchronous operation. Thus, all the distance-measuring devices 10's emit electromagnetic waves into a propagating medium at the same time.

Also connected to the distance-measuring devices 10's is an arithmetic-processing unit 2, in which the distance *d* to the object M calculated by every distance-measuring device 10 is inputted. The coordinates of the object M are found from the distances d s and the relative positions of the distance-measuring devices 10's.

The working and effect of the distance-measuring equipment 1 will now be described.

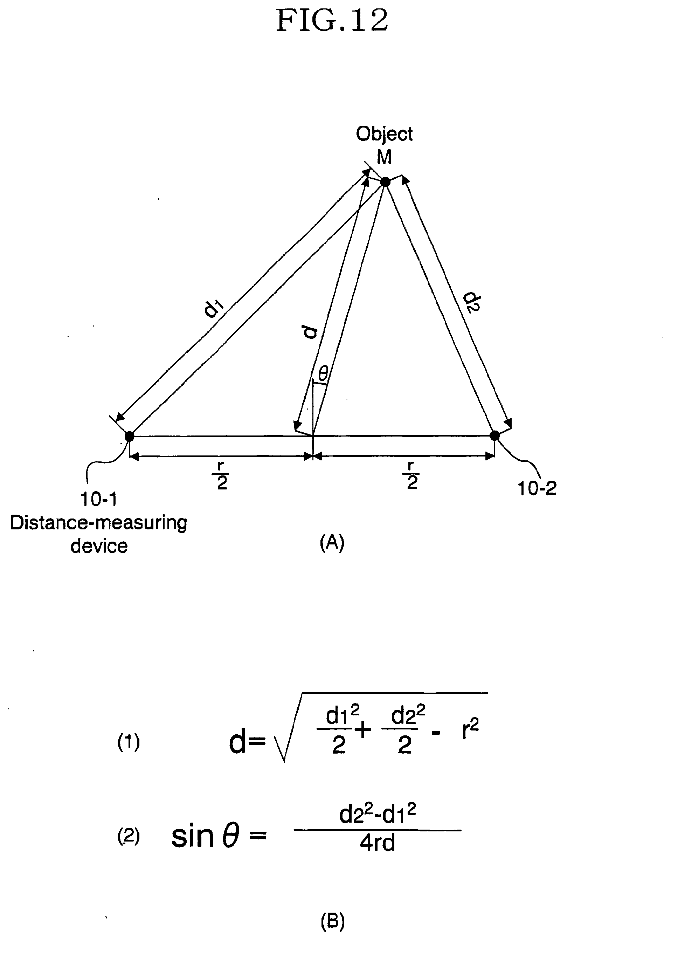

As shown in Fig. 12 (A), the controller 3 synchronizes two distance-measuring devices 10-1 and 10-2, which emit electromagnetic waves at the same time. Standing wave S1 and S2 are formed between the object M and the distance-measuring devices 10-1 and 10-2, and the distances $d_1$ and $d_2$ from the distance-measuring devices 10-1 and 10-2 to the object M are calculated.

The calculated values $d_1$ and $d_2$ are inputted in the arithmetic-processing unit 2. The distance *d* from the middle point of the straight line (hereinafter "straight line-1") between the two distance-measuring devices 10-1 and 10-2 to the object M and the angle θ included between the straight line orthogonal to the straight line-1 and the straight line from the middle point of the straight line-1 to the object M are calculated by using the equations (1) and (2) shown in Fig. 12 (B).

Thus, the relative positions of the two devices 10-1 and 10-2 and the object M in the plane including them are determined by using the distance d and the angle θ.

If three distance-measuring devices 10's are provided, the relative positions of the three devices 10's and the object M are determined in three dimensions.

INDUSTRIAL APPLICABILITY

The first feature of the present invention brings about the following effects (1) to (4).

(1) When the frequency of a frequency-control signal being sent out from the frequency-controlling means is changed, the wavelength of an electromagnetic wave being sent out from the transmitting means changes, which causes the change of a standing wave formed in the propagating medium between the transmitting means and an object, changing the amplitude of the standing wave. Thus, changing the frequency of the frequency-control signal causes the change of the value of an amplitude signal being outputted from the detecting means. Accordingly, the signal-processing unit can form a frequency-amplitude function based on the changing frequency of the frequency-control signal and the changing value of the amplitude signal. The amplitude of the standing wave at the point of the detecting means changes periodically when the frequency of the electromagnetic wave, or the frequency-control signal, is changed. The period of periodic change of the amplitude of the standing wave is in inverse proportion to the distance between the detecting means and the object. Accordingly, the period of periodic change of amplitude of the standing wave, namely, the period of the frequency-amplitude function can be calculated, and the distance between the detecting means and the object can be calculated by using the period.

(2) The distance between the detecting means and the object is determined by only the period of periodic change of amplitude of the standing wave and is irrelevant to the time necessary for the progressive wave to advance from the transmitting means, be reflected by the object, and return to the detecting means; therefore, if the distance to the object is as short as several ten centimeters, the distance can be measured accurately.

(3) If the frequency of the frequency-control signal is changed at random in accordance with the M-series code or the like, two or more distance-measuring devices located near to each other are prevented from emitting electromagnetic waves of the same frequency and phase at the same time. Therefore, the measuring accuracy of each distance-measuring devices is not disturbed by electromagnetic waves from the other distance-measuring devices, and each distance-measuring device is capable of measuring distances even under interference by the other distance-measuring devices.

(4) If a distance-measuring device is directed toward two or more objects and accordingly there occur two or more standing waves between the distance-measuring device and the objects, the period of the frequency-amplitude function of each standing wave can be found by transforming the frequency-amplitude function into a period function through Fourier transformation. Accordingly, the distance to every object can be measured.

The second feature of the present invention brings about the following effects (1) to (3).

(1) When the frequency of a frequency-control signal being sent out from the frequency-controlling means is changed, the wavelength of an electromagnetic wave being sent out from the transmitting means changes, which causes the change of a standing wave formed in the propagating medium between the transmitting means and an object, changing the amplitude of the standing wave. Thus, changing the frequency of the frequency-control signal causes the change of the value of an amplitude signal being outputted from the detecting means. Accordingly, the signal-processing unit can form a frequency-amplitude function based on the changing frequency of the frequency-control signal and the changing value of the amplitude signal. The amplitude of the standing wave at the point of the detecting means changes periodically when the frequency of the electromagnetic wave, or the frequency-control signal, is changed. The period of periodic change of the amplitude of the standing wave is in inverse proportion to the distance between the detecting means and the object. Accordingly, the period of the frequency-amplitude function can be determined by finding two or more frequencies $f_n$ to $f_{n+k}$ of the frequency-control signal which maximize or minimize the amplitude of the standing wave, namely, minimize or maximize the value of the frequency-amplitude function, choosing the two frequencies $f_n$ and $f_{n+k}$, and finding the number "$k$ - 1" of frequencies minimizing or maximizing the value of the frequency-amplitude function between the frequencies $f_n$ and $f_{n+k}$. Accordingly, the distance from the detecting means to the object can be calculated by using the period thus determined.

(2) The distance between the detecting means and the object is determined by only the period of periodic change of amplitude of the standing wave and is irrelevant to the time necessary for the progressive wave to advance from the transmitting means, be reflected by the object, and return to the detecting means; therefore, if the distance to the object is as short as several ten centimeters, the distance can be measured accurately.

(3) If the frequency of the frequency-control signal is changed at random in accordance with the M-series code or the like, two or more distance-measuring devices located near to each other are prevented from emitting electromagnetic waves of the same frequency and phase at the same time. Therefore, the measuring accuracy of each distance-measuring devices is not disturbed by electromagnetic waves from the other distance-measuring devices, and each distance-measuring device is capable of measuring distances even under interference by the other distance-measuring devices.

The third feature of the present invention brings about the following effect. The wave-detecting unit does the synchronous detection of the amplitude signal from the receiving unit 13a by using the frequency-modulation signal to form a demodulated signal and outputs an amplitude signal corresponding to the amplitude of the demodulated signal. The value of the frequency-amplitude function thus obtained increases or decreases monotonously in the vicinity of each of the frequencies minimizing or maximizing the amplitude of the standing wave. Besides, the value of the frequency-amplitude function changes from plus to minus or from minus to plus in the vicinity of each of the frequencies minimizing or maximizing the amplitude of the standing wave. Accordingly, the distance-measuring device is accurate in detecting frequencies minimizing or maximizing the amplitude of the standing wave and hence is accurate in measuring the distance to the object.

The fourth feature of the present invention brings about the following effects (1) to (4).

(1) When the frequency of periodic change of intensity of the light beam being emitted by the light source is changed, the amplitude of the standing wave formed by the standing wave-forming means changes, which causes the amplitude signal outputted by the detecting means to change. Accordingly, the signal-processing unit can form a frequency-amplitude function based on the information about the frequency of periodic change of intensity of the light beam emitted from the light source and the amplitude signal. The amplitude of the standing wave at the point of the detecting means changes periodically when the frequency of periodic change of intensity of the light beam is changed. The period of periodic change of the amplitude of the standing wave is in inverse proportion to the distance between the detecting means and the object. Accordingly, the signal-processing unit can determine the period of the frequency-amplitude function and then calculate the distance between the detecting means and the object by using the period.

(2) The distance between the detecting means and the object is determined by only the period of periodic change of amplitude of the standing wave and is irrelevant to the time necessary for the light beam to advance from the light source, be reflected by the object, and reach the detecting means; therefore, if the distance to the object is as short as several ten centimeters, the distance can be measured accurately.

(3) If the frequency of periodic change of intensity of the light beam is changed at random in accordance with the M-series code or the like, two or more distance-measuring devices located near to each other are prevented from emitting light beams of the same frequency and phase of periodic change of intensity at the same time. Therefore, the measuring accuracy of each distance-measuring devices is not disturbed by light beams from the other distance-measuring devices, and each distance-measuring device is capable of measuring distances even under interference by the other distance-measuring devices.

(4) If a distance-measuring device is directed toward two or more objects and accordingly there occur two or more standing waves between the distance-measuring device and the objects, the period of the frequency-amplitude function of each standing wave can be found by transforming the frequency-amplitude function into a period function through Fourier transformation. Accordingly, the distance to every object can be measured.

The fifth feature of the present invention brings about the following effects (1) to (3).

(1) When the frequency of periodic change of intensity of the light beam being emitted by the light source is changed, the amplitude of the standing wave formed by the standing wave-forming means changes, which causes the amplitude signal outputted by the detecting means to change. Accordingly, the signal-processing unit can form a frequency-amplitude function based on the information about the frequency of the periodic change of intensity of the light beam and the amplitude signal. The amplitude of the standing wave at the point of the detecting means changes periodically when the frequency of periodic change of intensity of the light beam is changed. The period of periodic change of the amplitude of the standing wave is in inverse proportion to the distance between the detecting means and the object. Accordingly, the period of the frequency-amplitude function can be determined by finding two or more frequencies $f_n$ to $f_{n+k}$ of periodic change of intensity of the light beam which maximize or minimize the amplitude of the standing wave, namely, minimize or maximize the value of the frequency-amplitude function, choosing the two frequencies $f_n$ and $f_{n+k}$, and finding the number "$k$ - 1" of frequencies minimizing or maximizing the value of the frequency-amplitude function between the frequencies $f_n$ and $f_{n+k}$. Accordingly, the distance between the detecting means and the object can be calculated by using the period thus determined.

(2) The distance between the detecting means and the object is determined by only the period of periodic change of amplitude of the standing wave and is irrelevant to the time necessary for the light beam to advance from the light source, be reflected by the object, and reach the detecting means; therefore, if the distance to the object is as short as several ten centimeters, the distance can be measured accurately.

(3) If the frequency of periodic change of intensity of the light beam is changed at random in accordance with the M-series code or the like, two or more distance-measuring devices located near to each other are prevented from emitting light beams of the same frequency and phase of periodic change of intensity at the same time. Therefore, the measuring accuracy of each distance-measuring device is not disturbed by light beams from the other distance-measuring devices, and each distance-measuring device is capable of measuring distances even under interference by the other distance-measuring devices.

The sixth feature of the present invention brings about the following effect. The wave-detecting unit does the synchronous detection of an amplitude signal from the receiving unit by using a frequency-modulation signal to form a demodulated signal and outputs an amplitude signal corresponding to the amplitude of the demodulated signal. The value of the frequency-amplitude function thus obtained increases or decreases monotonously in the vicinity of each of the frequencies minimizing or maximizing the amplitude of the standing wave. Besides, the value of the frequency-amplitude function changes from plus to minus or from minus to plus in the vicinity of each of the frequencies minimizing or maximizing the amplitude of the standing wave. Accordingly, the distance-measuring device is accurate in detecting frequencies minimizing or maximizing the amplitude of the standing wave and hence is accurate in measuring the distance to the object.

The seventh feature of the present invention brings about the following effect. Two or more distance-measuring devices are operated in synchronism, and the distances from them to an object are measured simultaneously. Accordingly, the coordinates of the object can be determined based on the measured distances and the relative positions of the distance-measuring devices. Thus, the relative positions of the distance-measuring devices and the object can be determined in two or three dimensions.

The eighth feature of the present invention brings about the following effects (1) to (4).

(1) When the frequency of a frequency-control signal being sent out from the frequency-controlling means is changed, the wavelength of an electromagnetic wave being sent out from the transmitting means changes, which causes the change of a standing wave formed in the propagating medium between the transmitting means and an object, changing the amplitude of the standing wave. Thus, changing the frequency of the frequency-control signal causes the change of the value of an amplitude signal being outputted from the detecting means. Accordingly, the signal-processing unit can form a frequency-amplitude function based on the changing frequency of the frequency-control signal and the changing value of the amplitude signal. The amplitude of the standing wave at the point of the detecting means changes periodically when the frequency of the electromagnetic wave, or the frequency-control signal, is changed. The period of periodic change of the amplitude of the standing wave is in inverse proportion to the distance between the detecting means and the object. Accordingly, the period of periodic change of amplitude of the standing wave, namely, the period of the frequency-amplitude function can be determined, and the distance between the detecting means and the object can be calculated by using the period.

(2) The distance between the detecting means and the object is determined by only the period of periodic change of amplitude of the standing wave and is irrelevant to the time necessary for the progressive wave to advance from the transmitting means, be reflected by the object, and return to the detecting means; therefore, if the distance to the object is as short as several ten centimeters, the distance can be measured accurately.

(3) If the frequency of the frequency-control signal is changed at random in accordance with the M-series code or the like, two or more distance-measuring devices located near to each other are prevented from emitting electromagnetic waves of the same frequency and phase at the same time. Therefore, the measuring accuracy of each distance-measuring devices is not disturbed by electromagnetic waves from the other distance-measuring devices, and each distance-measuring device is capable of measuring distances even under interference by the other distance-measuring devices.

(4) If a distance-measuring device is directed toward two or more objects and accordingly there occur two or more standing waves between the distance-measuring device and the objects, the period of the frequency-amplitude function of each standing wave can be found by transforming the frequency-amplitude function into a period function through Fourier transformation. Accordingly, the distance to every object can be measured.

## Claims

1. A distance-measuring device for measuring the distance to an object, comprising;

    a frequency-controlling means which outputs a frequency-control signal whose frequency is changing;
    a transmitting means which is connected to the frequency-controlling means and sends out an electromagnetic wave, whose frequency is the same as the frequency of the frequency-control signal, into a propagating medium between itself and the object, toward the object;
    a detecting means which is provided between the transmitting means and the object, detects the amplitude of a standing wave formed in the propagating medium, and outputs an amplitude signal corresponding to the detected amplitude; and

a signal-processing unit which receives information about the frequency of the frequency-control signal and the amplitude signal, forms a frequency-amplitude function representing the relation between the frequency of the frequency-control signal and the value of the amplitude signal, and calculates the distance between the detecting means and the object by using the period of the frequency-amplitude function.

2. A distance-measuring device for measuring the distance to an object, comprising;

a frequency-controlling means which outputs a frequency-control signal whose frequency is changing;

a transmitting means which is connected to the frequency-controlling means and sends out an electromagnetic wave, whose frequency is the same as the frequency of the frequency-control signal, into a propagating medium between itself and the object, toward the object;

a detecting means which is provided between the transmitting means and the object, detects the amplitude of a standing wave formed in the propagating medium, and outputs an amplitude signal corresponding to the detected amplitude; and

a signal-processing unit which receives information about the frequency of the frequency-control signal and the amplitude signal, forms a frequency-amplitude function representing the relation between the frequency of the frequency-control signal and the value of the amplitude signal, finds two or more frequencies $f_n$ to $f_{n+k}$ of the frequency-control signal minimizing or maximizing the value of the frequency-amplitude function, chooses the two frequencies $f_n$ and $f_{n+k}$, finds the number "$k - 1$" of frequencies minimizing or maximizing the value of the frequency-amplitude function between the frequencies $f_n$ and $f_{n+k}$, and calculates the distance between the detecting means and the object by using the frequencies $f_n$ and $f_{n+k}$ and the number "$k - 1$".

3. The distance-measuring device according to claim 2, further comprising a modulator for the frequency modulation of the frequency-control signal, the detecting means including:

a receiving unit which detects the amplitude of the standing wave and outputs an amplitude signal corresponding to the amplitude; and

a wave-detecting unit which receives a frequency-modulation signal from the modulator, does the synchronous detection of the amplitude signal by using the frequency-modulation signal to form a demodulated signal, and outputs an amplitude signal corresponding to the amplitude of the demodulated signal.

4. A distance-measuring device for measuring the distance to an object, comprising:

a light source which emits a light beam (hereinafter the "original beam") whose intensity is changing periodically with changing frequency;

a light-splitting means which splits the original beam into two beams and directs one beam after split to the object through a propagating medium between itself and the object;

a means which causes the reflection of the beam after split directed to the object and the other beam after split to interfere with each other to become a standing wave;

a detecting means which detects the amplitude of the standing wave and outputs an amplitude signal corresponding to the amplitude; and

a signal-processing unit which receives information about the frequency of the periodic change of intensity of the original beam and the amplitude signal, forms a frequency-amplitude function representing the relation between the frequency of periodic change of intensity of the original beam and the value of the amplitude signal, and calculates the distance between the detecting means and the object by using the period of the frequency-amplitude function.

5. A distance-measuring device for measuring the distance to an object, comprising:

a light source which emits a light beam (hereinafter the "original beam") whose intensity is changing periodically with changing frequency;

a light-splitting means which splits the original beam into two beams and directs one beam after split to the object through a propagating medium between itself and the object;

a means which causes the reflection of the beam after split directed to the object and the other beam after split to interfere with each other to become a standing wave;

a detecting means which detects the amplitude of the standing wave and outputs an amplitude signal corresponding to the amplitude; and

a signal-processing unit which receives information about the frequency of periodic change of intensity of the original beam and the amplitude signal, forms a frequency-amplitude function representing the relation between the frequency of periodic change of intensity of the original beam and the value of the amplitude signal, finds two or more frequencies $f_n$ to $f_{n+k}$ of periodic change of intensity of the original beam minimizing or maximizing the value of the frequency-amplitude function, chooses the two frequencies $f_n$ and $f_{n+k}$, finds the number "$k$ - 1" of frequencies minimizing or maximizing the value of the frequency-amplitude function between the frequencies $f_n$ and $f_{n+k}$, and calculates the distance between the detecting means and the object by using the frequencies $f_n$ and $f_{n+k}$ and the number "$k$ - 1".

6. The distance-measuring device according to claim 5, further comprising a modulator for the frequency modulation of the periodic change of intensity of the original beam, the detecting means including:

a receiving unit which detects the amplitude of the standing wave and outputs an amplitude signal corresponding to the amplitude; and
a wave-detecting unit which receives a frequency-modulation signal from the modulator, does the synchronous detection of the amplitude signal by using the frequency-modulation signal to form a demodulated signal, and outputs an amplitude signal corresponding to the amplitude of the demodulated signal.

7. Distance-measuring equipment for measuring the distance to an object, comprising:

a plurality of distance-measuring devices of claim 1, 2, 3, 4, 5 or 6;
a controller which controls the distance-measuring devices for their synchronous operation; and
an arithmetic-processing unit which the distance from each distance-measuring device to the object found by said device is inputted into and calculates the coordinates of the object based on the inputted distances and the relative positions of the distance-measuring devices.

8. A method of measuring the distance to an object, comprising the steps of:

sending out an electromagnetic wave from a transmitting means into a propagating medium between the transmitting means and the object, toward the object, to form a standing wave between the transmitting means and the object;
detecting the amplitude of the standing wave with a detecting means disposed at a point between the transmitting means and the object;
changing the frequency of the electromagnetic wave and forming a frequency-amplitude function which represents the relation between the frequency of the electromagnetic wave and the amplitude of the standing wave; and
calculating the distance between the detecting means and the object by using the period of the frequency-amplitude function.

# FIG.1

# FIG.2

Value P of
amplitude signal

Frequency-amplitude
function
$A(f, d_1)$

$0$   $f_L$   $f_N$   $f_n+K$   $f_u$

Frequency $f$
of frequency-
control signal

(A)

$F(cy)$

$cy$

(B)

$F(cy)$

$cy_1$   $cy_2$   $cy_3$

(C)

# FIG.3

Setting of initial frequency fL
and final frequecy fu

↓

$f = f_L$

↓

Emission of electromagnetic
wave of frequency f

↓

Detection of amplitude SP
of standing wave S

↓

N ← f=fu

Y ↓

Formation of frequency-
amplitude function $A(f, d_1)$

↓

Fourier transformation of
frequency-amplitude
function $A(f, d_1)$ into
frequency function(cy)

↓

Determination of period cy
where F(cy)becomes
maximum

↓

$d_1$

$f = f + \triangle f$

# FIG.4

```
┌─────────────────────────────┐
│ Setting of initial frequency fL │
│   and final frequency fu     │
└─────────────────────────────┘
                │
                ▼
┌─────────────────────────────┐
│            f=fL              │
└─────────────────────────────┘
                │
                ▼
┌─────────────────────────────┐
│   Emission of electromagnetic │
│      wave of frequency f     │
└─────────────────────────────┘
                │
                ▼
┌─────────────────────────────┐
│   Detection of amplitude SP  │
│      of standing wave S      │
└─────────────────────────────┘
                │
                ▼
              f=fu
```

$f=f+\Delta f$

N

Y

```
┌─────────────────────────────┐
│   Formation of frequency-    │
│  amplitude function A(f, d1) │
└─────────────────────────────┘
                │
                ▼
┌─────────────────────────────┐
│  Detection of frequencies f  │
│   minimizing or maximizing   │
│     frequency-amplitude      │
│     function A(f, d1)        │
└─────────────────────────────┘
```

$$d_1 = \frac{kc}{4\,(f_{n+k} - f_n)}$$

$d_1$

Distance-measuring device
10B

Frequency-controlling means
11B

Signal-processing unit
14B

Transmitting means
12B

Detecting means
13B

11a

Wave-detecting unit 13b

Receiving unit 13a

Progressive wave
D

Object
M

Modulator
20

Progressive wave
D

Standing wave
S

Reflected wave

11b

EP 1 365 256 A1

FIG.5

# FIG.6

Amplitude SP of
standing wave S

(A)

$f_N$  $f_{N+1}$  $f_{N+2}$  $f_{N+k}$  Frequency f of
frequency-control signal

0

Value P of
amplitude signal

Frequency-amplitude
function A (f, d1)

(B)  0

$f_{N+1}$

$f_N$  $f_{N+2}$  $f_{N+k}$

f

# FIG.7

```
Setting of initial frequency fL
and final frequency fu
        │
        ▼
      f=fL
        │
        ▼
      θ=O
        │
        ▼
   fs=f+fd×cos θ
        │
        ▼
Detection of amplitude SP
of standing wave S
        │
        ▼
    < θ=2π >  ──N──> θ=θ+Δθ
        │Y
        ▼
Synchronous detection of
amplitude signal for a
demodulated signal at
frequency f
        │
        ▼
    < f=fu >  ──False──> f=f+Δf
        │
        ▼
Formation of frequency-
amplitude function A(f, d₁)
        │
        ▼
Detection of frequencies f
minimizing or maximizing
frequency-amplitude function
A
        │
        ▼
       d₁
```

Frequency modulation

# FIG.8

B1

Progressive Wave D

Object
M

B2

Reflected wave R

0    X₁

d

(A)

B2

S

Standing wave S

M

0    X₁

d₁

d

(B)

FIG.9

Terminal resistor
$R_T$

Object

Detecting means
13C

Signal-processing unit
14C

$x=l$

$x=d2$

$x=d1$

$x=0$

$M_2$

$M_1$

L

Resistor
RS

Distance-measuring
device 10C

Signal source
11C

11a

11b

# FIG.10

Distance-measuring device 10D

Light source 11D

11a

11b

light-splitting means 31

32

Object M

$d_1$

L

Vp

L

Standing wave S

13f

13g

13h

Detecting means 13D

Signal-processing unit 14D

# FIG.11

Distance-measuring
equipment 1

Distance-measuring
device
10-1

D

S

D

S

M
Object

2
Arithmetic-
processing unit

3
Controller

10-2

# FIG.12

Object
M

$d_1$

$d$

$\theta$

$d_2$

10-1
Distance-measuring
device

$\frac{r}{2}$

$\frac{r}{2}$

10-2

(A)

(1) $$d = \sqrt{\frac{d_1{}^2}{2} + \frac{d_2{}^2}{2} - r^2}$$

(2) $$\sin\theta = \frac{d_2{}^2 - d_1{}^2}{4rd}$$

(B)

## INTERNATIONAL SEARCH REPORT

| International application No. |
|---|
| PCT/JP02/01825 |

| A. CLASSIFICATION OF SUBJECT MATTER |
|---|
| Int.Cl$^7$ G01S13/32, G01B15/00, G01S17/32, G01C3/06, G01B11/00 |

According to International Patent Classification (IPC) or to both national classification and IPC

| B. FIELDS SEARCHED |
|---|
| Minimum documentation searched (classification system followed by classification symbols) |
| Int.Cl$^7$ G01S13/32, G01B15/00, G01S17/32, G01C3/06, G01B11/00 |

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP, 59-142485, A (Yamatake-Honeywell Co., Ltd.),<br>15 August, 1984 (15.08.84),<br>Full text; all drawings<br>Full text; all drawings<br>(Family: none) | 1,2,8<br>3,4,5,6,7 |
| Y | JP, 6-160082, A (Matsushita Electric Works, Ltd.),<br>07 June, 1994 (07.06.94),<br>Page 2, left column, lines 46 to 48<br>(Family: none) | 3,6 |
| Y | JP, 5-203412, A (ATR Optical and Radio Communications),<br>10 August, 1993 (10.08.93),<br>Fig. 2<br>(Family: none) | 4,5,6 |
| Y | JP, 38-1257, B1 (Anritsu Denpa Kogyo K.K.),<br>20 February, 1963 (20.02.63),<br>Full text; all drawings<br>(Family: none) | 7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 March, 2002 (26.03.02) | 02 April, 2002 (02.04.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

# EP 1 365 256 A1

<table>
<tr><td colspan="2" align="center">**INTERNATIONAL SEARCH REPORT**</td><td>International application No.<br>PCT/JP02/01825</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| P,X | Tetsushi UEBO, Takashi KITAGAWA, Tadamitsu IRIYA, "Teizaiha o Mochii Su10cm kara Sokutei Kano na Kobunkaino Radar", The Institute of Electronics, Information and Communication engineers Gijutsu Kenkyu Hokoku, Vol.100, No.693 (The Institute of Electronics, Information and Communication Engineers), 08 March, 2001 (08.03.01), Pages 161 to 166 | 1,2,3 |
| A | JP, 5-281341, A (Isao IIDA), 29 October, 1993 (29.10.93), Full text; all drawings (Family: none) | 1-8 |
| A | JP, 58-198781, A (Tasuku TAKAGI), 18 November, 1983 (18.11.83), Full text; all drawings (Family: none) | 1-8 |

Form PCT/ISA/210 (continuation of second sheet) (July 1998)